(19) Europäisches Patentamt / European Patent Office / Office européen des brevets

(11) **EP 3 545 338 B1**

(12) **EUROPÄISCHE PATENTSCHRIFT**

(45) Veröffentlichungstag und Bekanntmachung des Hinweises auf die Patenterteilung:
**30.06.2021 Patentblatt 2021/26**

(51) Int Cl.:
***G01S 17/93*** *(2020.01)*      ***G01S 7/486*** *(2020.01)*
***G01S 7/497*** *(2006.01)*

(21) Anmeldenummer: **17801702.6**

(22) Anmeldetag: **20.11.2017**

(86) Internationale Anmeldenummer:
**PCT/EP2017/079768**

(87) Internationale Veröffentlichungsnummer:
**WO 2018/095862 (31.05.2018 Gazette 2018/22)**

(54) **EMPFANGSEINRICHTUNG FÜR EINE OPTISCHE DETEKTIONSVORRICHTUNG, DETEKTIONSVORRICHTUNG UND FAHRERASSISTENZSYSTEM**

RECEIVING UNIT FOR AN OPTICAL DETECTION DEVICE, DETECTION DEVICE AND DRIVER ASSISTANCE SYSTEM

DISPOSITIF DE RÉCEPTION POUR UN DISPOSITIF DE DÉTECTION OPTIQUE, DISPOSITIF DE DÉTECTION ET SYSTÈME D'AIDE À LA CONDUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2016 DE 102016122645**

(43) Veröffentlichungstag der Anmeldung:
**02.10.2019 Patentblatt 2019/40**

(73) Patentinhaber: **Valeo Schalter und Sensoren GmbH**
**74321 Bietigheim-Bissingen (DE)**

(72) Erfinder:
- LIN, Lin
  **74321 Bietigheim-Bissingen (DE)**
- HORVATH, Peter
  **74321 Bietigheim-Bissingen (DE)**
- SCHULER, Thomas
  **74321 Bietigheim-Bissingen (DE)**

(56) Entgegenhaltungen:
**EP-A1- 2 194 397    DE-A1-102011 005 746**

**Beschreibung**

**Technisches Gebiet**

Die Erfindung betrifft eine Empfangseinrichtung für eine nach einem Lichtlaufzeitverfahren arbeitende optische Detektionsvorrichtung zum Empfangen von an einem Objekt reflektierten optischen Empfangssignalen insbesondere einer Sendeeinrichtung der Detektionsvorrichtung, mit wenigstens einem optischen Sensor, welcher wenigstens eine Detektionsfläche mit wenigstens einer entlang einer ersten Ausdehnungsrichtung der wenigstens einen Detektionsfläche verlaufenden Reihe mit einer Mehrzahl von optischen Detektionsbereichen aufweist, wobei wenigstens zwei der Detektionsbereiche zur Ortsauflösung eines Empfangssignals getrennt voneinander ausgewertet werden können.

Ferner betrifft die Erfindung eine optische Detektionsvorrichtung, die nach einem Lichtlaufzeitverfahren arbeitet, mit wenigstens einer Sendeeinrichtung zum Senden von optischen Sendesignalen und wenigstens einer Empfangseinrichtung zum Empfangen von an einem Objekt reflektierten Sendesignalen als Empfangssignale, wobei die wenigstens eine Empfangseinrichtung wenigstens einen optischen Sensor umfasst, welcher wenigstens eine Detektionsfläche mit wenigstens einer entlang einer ersten Ausdehnungsrichtung der wenigstens einen Detektionsfläche verlaufende Reihe mit einer Mehrzahl von optischen Detektionsbereichen aufweist, wobei wenigstens zwei der Detektionsbereiche zur Ortsauflösung eines Empfangssignals getrennt voneinander ausgewertet werden können.

Außerdem betrifft die Erfindung ein Fahrerassistenzsystem für ein Fahrzeug, mit wenigstens einer nach einem Lichtlaufzeitverfahren arbeitenden optischen Detektionsvorrichtung und wenigstens einer elektronischen Steuereinrichtung zur Steuerung von Funktionseinrichtungen des Fahrzeugs abhängig von Informationen, welche durch die wenigstens eine Detektionsvorrichtung bereitgestellt werden, wobei die wenigstens eine Detektionsvorrichtung wenigstens eine Sendeeinrichtung zum Senden von optischen Sendesignalen und wenigstens eine Empfangseinrichtung zum Empfangen von an einem Objekt reflektierten Sendesignalen als Empfangssignale aufweist, wobei die wenigstens eine Empfangseinrichtung wenigstens einen optischen Sensor umfasst, welcher wenigstens eine Detektionsfläche mit wenigstens einer entlang einer ersten Ausdehnungsrichtung der wenigstens einen Detektionsfläche verlaufenden Reihe mit einer Mehrzahl von optischen Detektionsbereichen aufweist, wobei wenigstens zwei der Detektionsbereiche zur Ortsauflösung eines Empfangssignals getrennt voneinander ausgewertet werden können.

**Stand der Technik**

Ein vom Markt her bekanntes LiDAR-System weist eine Sendeeinrichtung zur Aussendung von optischen Sendesignalen in Form von Licht auf. Das Licht wird in einen Überwachungsbereich gesendet, um diesen auf Objekte hin zu überwachen. Bei Vorhandensein eines Objekts im Überwachungsbereich werden die Sendesignale dort reflektiert. Die reflektierten Sendesignale werden als Empfangssignale mit eine Empfangseinrichtung der Detektionsvorrichtung empfangen. Die Empfangseinrichtung weist einen CCD-Sensor auf, bei dem entlang einer Detektionsfläche mehrere Reihen mit jeweils eine Mehrzahl von Pixeln angeordnet sind. Die Pixel bilden jeweils einen optischen Detektionsbereich, welche zur Ortsauflösung des Empfangssignals getrennt voneinander ausgewertet werden können. Ein derartiges Li-DAR-System ist z.B. aus DE102011005746 bekannt.

Der Erfindung liegt die Aufgabe zugrunde, eine Empfangseinrichtung, eine Detektionsvorrichtung und ein Fahrerassistenzsystem der eingangs genannten Art zu gestalten, bei denen Objekte sowohl im Nahfeld, insbesondere in Entfernungen von einigen Metern, als auch im Fernfeld, insbesondere in Entfernungen von bis zu 100 m und mehr, besser erfasst werden können.

**Offenbarung der Erfindung**

Diese Aufgabe wird erfindungsgemäß bei der Empfangseinrichtung dadurch gelöst, dass die jeweiligen Ausdehnungen von wenigstens zwei Detektionsbereichen zumindest entlang der ersten Ausdehnungsrichtung betrachtet unterschiedlich sind. Die Erfindung ist definiert durch die unabhängigen Ansprüche 1, 5 und 6.

Erfindungsgemäß wird eine Ausdehnung, insbesondere eine Fläche, wenigstens eines Detektionsbereichs im Vergleich zu wenigstens einem weiteren Detektionsbereich vergrößert. Durch die Vergrößerung des wenigstens einen Detektionsbereichs kann eine störende Wirkung von Umgebungslicht auf diesen wenigstens einen Detektionsbereich verringert werden. So kann insgesamt ein Signal-Rausch-Verhältnis verbessert werden. Mit der Erfindung kann ein Signal-Rausch-Verhältnis insbesondere in Bezug auf Umgebungslicht basierendes Rauschen verbessert werden. Auf diese Weise kann die Empfangseinrichtung insbesondere zur Verwendung bei LiDAR-Systemen verbessert werden. Insgesamt bewirkt die erfindungsgemäße inhomogene Aufteilung der Detektionsbereiche eine effiziente Verbesserung des Signal-Rausch-Verhältnisses. Außerdem können durch die unterschiedlichen Ausdehnungen der Detektionsbereiche unterschiedliche Auflösungen erzielt werden. Mit Detektionsbereichen mit geringerer Ausdehnung kann eine größere Auflösung erreicht werden als mit Detektionsbereichen mit entsprechend größerer Ausdehnung. Insgesamt können bei entsprechender Orientierung der wenigstens einen Detektionsfläche im Raum sowohl relativ große Objekte in möglichst großer Entfernung, insbesondere im Fernfeld, als auch kleine Objekte in der nahen Umgebung, insbesondere im Nahfeld, jeweils bei optimalem Signal-Rausch-Verhältnis detektiert werden. Zur Erfassung von verhältnismäßig kleinen Objekten in verhältnismäßig kleinen Entfernungen ist eine entsprechende größere Auflösung erforderlich als für größere Objekte in größeren Entfernungen.

Als Nahfeld im Sinne der Erfindung werden insbesondere kleinere Entfernungen im Bereich einiger Meter bezeichnet. Das Fernfeld bezeichnet größere Entfernungen insbesondere bis zu 100 m und mehr. Mit der erfindungsgemäßen Detektionsvorrichtung können sowohl größere Objekte, insbesondere Fahrzeuge oder Personen, im Fernfeld als auch kleinere Objekte, insbesondere Steine, Schlaglöcher, Wasserleitungen oder dergleichen, im Nahfeld erfasst werden.

Vorteilhafterweise kann bei einer normalen Betriebsorientierung der Empfangseinrichtung die erste Ausdehnungsrichtung vertikal verlaufen. Auf diese Weise kann mit der Empfangseinrichtung ein vertikales Sichtfeld auf Objekte hin überwacht werden. Insbesondere bei der Verwendung bei einem Fahrzeug kann so die Fahrbahn im Nahfeld unmittelbar vor dem Fahrzeug mit wenigstens einem Detektionsbereich mit kleinerer Ausdehnung erfasst werden. Mit wenigstens einem Detektionsbereich mit größerer Ausdehnung kann das Fernfeld in größerer Entfernung auf größere Objekte hin überwacht werden.

Bei der Verwendung bei einem Fahrzeug kann die Orientierung der ersten Ausdehnungsrichtung relativ zum Fahrzeug unveränderlich sein. So kann je nach Ausrichtung des Fahrzeugs abhängig von einem Fahrbahnverlauf die erste Ausdehnungsrichtung und die Ausbreitungsrichtung für das Sendesignal mit dem Fahrzeug bewegt werden.

Die Detektionsvorrichtung kann vorteilhafterweise am Fahrzeug so ausgerichtet sein, dass die erste Ausdehnungsrichtung bei einem horizontalen Fahrbahnverlauf räumlich vertikal verläuft. Die Ausbreitungsrichtung für das Sendesignal kann in diesem Fall räumlich horizontal verlaufen.

Vorteilhafterweise kann die Detektionsvorrichtung ein Entfernungsmesssystem sein. Auf diese Weise kann mit der Detektionsvorrichtung eine Entfernung eines Objektes erfasst werden.

Die Sendeeinrichtung kann vorteilhafterweise wenigstens eine Lichtquelle aufweisen. Mit der wenigstens einen Lichtquelle können insbesondere gepulste Sendestrahlen als Sendesignale gesendet werden. Mit der wenigstens einen Lichtquelle können Sendesignale in für das menschliche Auge sichtbaren oder nicht sichtbaren Frequenzbereichen emittiert werden. Entsprechend kann die wenigstens eine Empfangseinrichtung der Detektionsvorrichtung wenigstens einen für die Frequenz des ausgesendeten Lichtes ausgelegten Sensor aufweisen.

Vorteilhafterweise kann die Detektionsvorrichtung eine laserbasierte Detektionsvorrichtung sein. Bei einer laserbasierten Detektionsvorrichtung kann die Sendeeinrichtung als Lichtquelle wenigstens einen Laser, insbesondere einen Diodenlaser, aufweisen.

Die Detektionsvorrichtung kann vorteilhafterweise ein scannendes System, insbesondere ein Laserscanner, sein. Mit einem scannenden System kann ein Überwachungsbereich mit insbesondere gepulsten Sendesignalen in einem Sichtfeld abgetastet werden. Alternativ kann die Detektionsvorrichtung ein mit Lichtblitzen arbeitendes System, insbesondere ein sogenanntes Flash-LiDAR-System, sein. Dabei können ein Sichtfeld mit einem Lichtblitz ausgeleuchtet und die an etwaigen Objekten reflektierten Empfangssignale mit der Sendeeinrichtung erfasst werden.

Erfindungsgemäß arbeitet die wenigstens eine Detektionsvorrichtung nach einem Lichtlaufzeitverfahren. Nach dem Lichtimpulslaufzeitverfahren arbeitende optische Detektionsvorrichtungen können als Time-of-Flight- (TOF), Light-Detection-and-Ranging-Systeme (LiDAR), Laser-Detection-and-Ranging-Systeme (LaDAR) oder dergleichen ausgestaltet und bezeichnet werden. Bei dem Lichtimpulslaufzeitverfahren wird eine Laufzeit vom Aussenden eines Sendesignals, insbesondere eines Lichtpulses, mit wenigstens einer Sendeeinrichtung bis zum Empfang des entsprechenden reflektierten Empfangssignals mit wenigstens einer Empfangseinrichtung gemessen und daraus eine Entfernung zwischen der Detektionsvorrichtung und dem erkannten Objekt ermittelt.

Die Erfindung kann vorteilhafterweise bei einem Fahrzeug, insbesondere einem Kraftfahrzeug, verwendet werden. Vorteilhafterweise kann die Erfindung bei einem Landfahrzeug, insbesondere einem Personenkraftwagen, Lastkraftwagen, einem Bus, einem Motorrad oder dergleichen, einem Wasserfahrzeug, einem Luftfahrzeug oder einem kombinierten Land-, Wasser- und/oder Luftfahrzeug verwendet werden. Die Erfindung kann auch bei autonomen oder wenigstens teilweise autonomen Fahrzeugen eingesetzt werden.

Vorteilhafterweise kann die optische Detektionsvorrichtung Teil eines Fahrerassistenzsystems eines Fahrzeugs sein oder mit diesem verbunden sein. Die Informationen der optischen Detektionsvorrichtung können zur Steuerung von Funktionskomponenten des Fahrzeugs herangezogen werden. Mit den Funktionskomponenten können insbesondere Fahrfunktionen und/oder Signalisierungseinrichtungen des Fahrzeugs, insbesondere eine Lenkung, ein Bremssystem und/oder ein Motor oder dergleichen, gesteuert werden. So kann bei Erkennung eines Objekts mit der optischen Detektionsvorrichtung das Fahrzeug mit den entsprechenden Funktionskomponenten gelenkt und/oder in seiner Geschwindigkeit geändert, insbesondere gestoppt, werden und/oder wenigstens ein Signal ausgegeben werden.

Alternativ oder zusätzlich kann vorteilhafterweise die optische Detektionsvorrichtung Teil einer Fahrwerksteuerung eines Fahrzeugs sein oder mit dieser verbunden sein. Mit der Fahrwerksteuerung kann ein Fahrwerk des Fahrzeugs an eine Fahroberfläche angepasst werden. Mit der Fahrwerksteuerung kann eine aktive Federung oder ein aktives Fahrwerk gesteuert werden. So kann bei Erkennung eines Objekts, insbesondere einer Erhöhung auf oder einer Vertiefung in der Fahroberfläche, mit der optischen Detektionsvorrichtung in einem mit dem Sichtfeld überwachten Überwachungsbereich das Fahrwerk, insbesondere die Federung, entsprechend angepasst werden. Mit der Fahrwerksregelung kann das Fahrwerk aktiv auf eine kommende Situation, insbesondere Unebenheiten der Fahroberfläche, eingestellt werden

Gemäß der Erfindung ist die Detektionsfläche in wenigstens zwei Abschnitte unterteilt, in denen Signale von Objekten aus unterschiedlichen Entfernungen zu der Empfangseinrichtung erfasst werden können, wobei die Ausdehnung von entsprechenden Detektionsbereichen in den Abschnitten zur Erfassung von weiter entfernten Objekte größer sein können als die Ausdehnung von entsprechenden Detektionsbereichen in Abschnitten zur Erfassung von näheren Objekten. Auf diese Weise können Auflösungen in den Abschnitten zur Erfassung von näheren Objekten größer sein als Auflösungen in den Bereichen zur Erfassung weiter entfernte Objekte. So können mit dem wenigstens einen Detektionsbereich in dem wenigstens einen Abschnitt für nähere Objekte auch sehr kleine Objekte, insbesondere Steine, Wasserleitungen oder dergleichen, detektiert werden. Durch die vergrößerte Auflösung bei dem dortigen wenigstens einen Detektionsbereich kann entsprechend weniger Umgebungslicht erfasst werden. Dadurch kann das Signal-Rausch-Verhältnis verbessert werden, ohne dass das Empfangssignal beeinträchtigt wird. Durch die kleinere Auflösung in dem wenigstens einen Detektionsbereich für weiter entfernte Objekte kann zur Erfassung von Objekten in entsprechend größerer Entfernung ebenfalls das Signal-Rausch-Verhältnis verbessert werden.

Gemäss der Erfindung ist eine Ausdehnung wenigstens eines zentralen Detektionsbereiches, welcher sich bezüglich der ersten Ausdehnungsrichtung in der Nähe des Zentrums der wenigstens einen Detektionsfläche befindet, größer als eine Ausdehnung wenigstens eines Rand-Detektionsbereichs, welcher sich im Vergleich zu dem wenigstens einen zentralen Detektionsbereich näher an einem Rand der Detektionsfläche befindet. Auf diese Weise kann wenigstens ein Detektionsbereich zur Erfassung von Objekten in größerer Entfernung im Zentrum der wenigstens an Detektionsfläche angeordnet sein. Wenigstens ein Detektionsbereich zur Erfassung von Objekten in näherer Umgebung können im Bereich eines Randes der wenigstens ein Detektionsbereich angeordnet sein.

Bei einer Orientierung der wenigstens einen Detektionsbereich derart, dass die erste Ausdehnungsrichtung räumlich etwa vertikal verläuft, kann wenigstens ein Rand-Detektionsbereich räumlich oben oder räumlich unten an der wenigstens einen Detektionsfläche angeordnet sein. Insbesondere bei der Verwendung einer entsprechenden Empfangsoptik können so die Empfangsstrahlen von weiter entfernten Objekten in dem wenigstens einen zentralen Detektionsbereich erfasst werden. Empfangsstrahlen von näheren Objekten, welche sich insbesondere am Boden, im Besonderen der Fahrbahnoberfläche, befinden, können in dem wenigstens einen Rand-Detektionsbereich erfasst werden.

Bei einer weiteren vorteilhaften Ausführungsform kann ein Verhältnis einer Winkelauflösung in wenigstens einem ersten Detektionsbereich mit einer größeren Ausdehnung, insbesondere einem zentralen Detektionsbereich, zu einer Winkelauflösung in wenigstens einem zweiten Detektionsbereich mit einer kleineren Ausdehnung, insbesondere einem Rand-Detektionsbereich, etwa zwischen 12 zu 1 und 8 zu 1, insbesondere etwa 10 zu 1, betragen. Auf diese Weise können mit dem wenigstens einen ersten Detektionsbereich entsprechend große Objekte auch in großen Entfernungen detektiert werden. Außerdem können mit dem wenigstens einen zweiten Detektionsbereich auch kleinere Objekte in kleineren Entfernungen erfasst werden.

Durch eine größere Winkelauflösung kann die Auflösung in dem entsprechenden Detektionsbereich verkleinert werden. Entsprechend kann durch eine kleinere Winkelauflösung die Auflösung vergrößert werden.

Vorteilhafterweise können mehrere zweite Detektionsbereiche jeweils mit verringerten Winkelauflösungen vorgesehen sein, um bei einer Verbesserung des Signal-Rausch-Verhältnisses auch kleine Objekte erfassen zu können.

Vorteilhafterweise kann eine Winkelauflösung in dem wenigstens einen ersten Detektionsbereich, insbesondere in wenigstens einem zentralen Detektionsbereich, etwa zwischen 0,8° und 1,2° insbesondere 1° betragen. Auf diese Weise kann für entsprechend große Objekte in entsprechend großer Entfernung, insbesondere im Fernfeld, eine ausreichende Auflösung erreicht werden. Insbesondere können auf diese Weise größere Objekte mit Ausdehnungen ab etwa 1 m bis 2 m, insbesondere Fahrzeuge oder Personen, im Fernfeld in größeren Entfernungen von zwischen 80 m und 120 m, insbesondere bis zu 110 m, mit der Empfangseinrichtung noch erkannt werden.

Vorteilhafterweise kann eine Winkelauflösung in dem wenigstens einen zweiten Detektionsbereich, insbesondere in wenigstens einem Rand-Detektionsbereich, etwa zwischen 0,08° und 0,12° insbesondere etwa 0,1° betr agen. Auf diese Weise können auch kleine Objekte in geringerer Entfernung, insbesondere im Nahfeld, noch erkannt werden. So können im Nahfeld, insbesondere in Entfernungen von einigen wenigen Metern, auch kleinere Objekte in der Größenordnung von einigen Zentimetern, insbesondere Steine, Schlaglöcher, Wasserleitungen oder dergleichen am Boden, insbesondere der Fahrbahnoberfläche, mit der Empfangseinrichtung noch erkannt werden.

Bei einer weiteren vorteilhaften Ausführungsform kann wenigstens ein Detektionsbereich mit einem Bildpunkt realisiert sein und/oder wenigstens ein Detektionsbereich kann aus mehreren Bildpunkten zusammengefasst sein oder werden.

Vorteilhafterweise kann wenigstens ein Detektionsbereich mit einem einzigen Bildpunkt realisiert sein. Auf diese Weise kann dieser wenigstens eine Detektionsbereich separat ausgelesen und entsprechend ausgewertet werden. Die Bildpunkte unterschiedlicher Detektionsbereiche können unterschiedliche Größen haben, sodass sie unterschiedliche Ausdehnungen zumindest in der ersten Ausdehnungsrichtung aufweisen können.

Alternativ oder zusätzlich kann wenigstens ein Detektionsbereich aus mehreren Bildpunkten zusammengefasst sein. Dabei können die Bildpunkte elektrisch/elektronisch zusammengeschaltet werden und/oder mithilfe eines entsprechenden Verfahrens, insbesondere auf Prozessorebene oder Softwareebene, ausgewertet werden. Die Bildpunkte können dabei je nach Bedarf zu entsprechend großen Detektionsbereichen zusammengefasst werden.

Bekanntermaßen können Bildpunkte als "Pixel" bezeichnet werden.

Bei einer weiteren vorteilhaften Ausführungsform kann der wenigstens eine optische Sensor ein elektrooptischer Sensor sein. Mit einem elektrooptischen Sensor können optische Empfangssignale in elektrische Signale umgewandelt werden. Die elektrischen Signale können mit entsprechenden elektrischen/elektronischen Steuer- und/oder Auswerteeinrichtungen ausgelesen und/oder verarbeitet werden.

Vorteilhafterweise kann der wenigstens eine optische Sensor als CMOS-Sensor, CCD-Sensor, Photodioden-Array oder dergleichen ausgestaltet sein.

Ferner wird die technische Aufgabe erfindungsgemäß bei der Detektionsvorrichtung dadurch gelöst, dass die jeweiligen Ausdehnungen von wenigstens zwei Detektionsbereichen zumindest entlang der ersten Ausdehnungsrichtung betrachtet unterschiedlich sind.

Vorteilhafterweise kann die Detektionsvorrichtung wenigstens eine insbesondere elektrische/elektronische Steuer- und/oder Auswerteeinrichtung aufweisen, mit der die Detektionsvorrichtung gesteuert und/oder mit der Detektionsvorrichtung erfasste Umgebungsinformationen, insbesondere Informationen über ein erfasstes Objekt, ausgewertet werden können.

Vorteilhafterweise kann die wenigstens eine Steuer- und/oder Auswerteeinrichtung mit wenigstens einer insbesondere elektrischen/elektronischen Steuereinrichtung des Fahrassistenzsystems verbunden sein. Auf diese Weise kann das Fahrerassistenzsystem auf Basis der mit der Detektionsvorrichtung erfassten Informationen entsprechende Funktionseinrichtungen des Fahrzeugs steuern.

Außerdem wird die technische Aufgabe erfindungsgemäß bei dem Fahrerassistenzsystem dadurch gelöst, dass die jeweiligen Ausdehnungen von wenigstens zwei Detektionsbereichen zumindest entlang der ersten Ausdehnungsrichtung betrachtet unterschiedlich sind.

Im Übrigen gelten die im Zusammenhang mit der erfindungsgemäßen Empfangseinrichtung, der erfindungsgemäßen Detektionsvorrichtung und dem erfindungsgemäßen Fahrassistenzsystem und deren jeweiligen vorteilhaften Ausgestaltungen aufgezeigten Merkmale und Vorteile untereinander entsprechend und umgekehrt.

**Kurze Beschreibung der Zeichnungen**

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch

Figur 1     ein Kraftfahrzeug in der Vorderansicht, welches ein Fahrerassistenzsystem mit einem LiDAR-System aufweist;

Figur 2     ein Funktionsschaubild des Kraftfahrzeugs mit dem Fahrerassistenzsystem mit dem LiDAR-System aus der Figur 1;

Figur 3     eine Vorderansicht eines Sensors der Empfangseinrichtung des LiDARSystems aus den Figuren 1 und 2;

Figur 4     eine Seitenansicht der Empfangseinrichtung des LiDAR-Systems aus den Figuren 1 und 2 beim Erfassen eines Objektes im Fernfeld.

In den Figuren sind gleiche Bauteile mit gleichen Bezugszeichen versehen.

**Ausführungsform(en) der Erfindung**

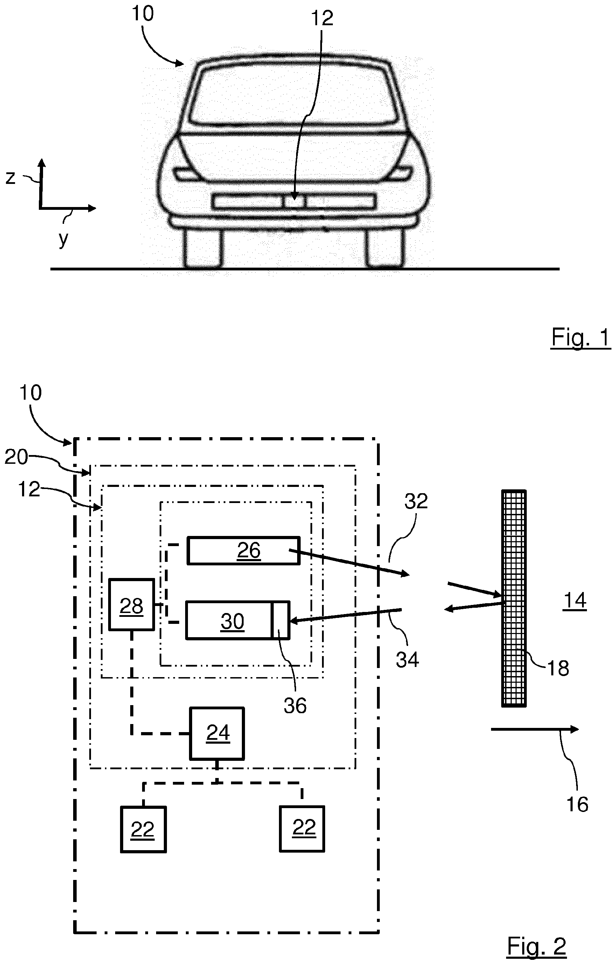

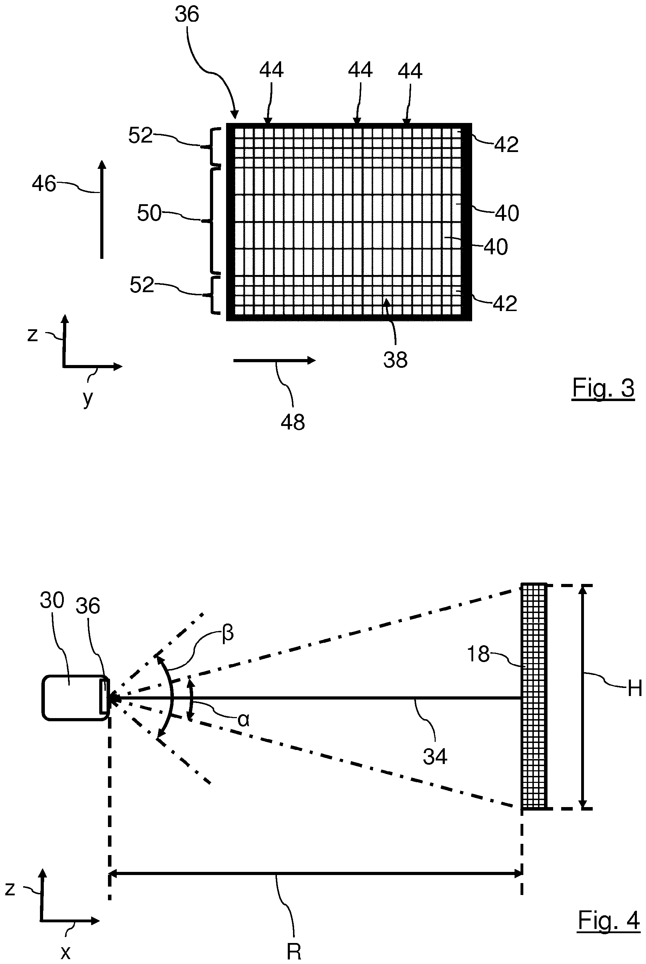

In der Figur 1 ist ein Kraftfahrzeug 10 in Form eines Personenkraftwagens in der Vorderansicht gezeigt. Das Kraftfahrzeug 10 verfügt über eine optische Detektionsvorrichtung beispielhaft in Form eines LiDAR-Systems 12. Das LiDAR-System 12 ist beispielhaft in der vorderen Stoßstange des Kraftfahrzeugs 10 angeordnet. Mit dem LiDAR-System 12 kann ein Überwachungsbereich 14 in Fahrtrichtung 16 vor dem Kraftfahrzeug 10 auf Objekte 18 hin überwacht werden. Das LiDAR-System 12 kann auch an anderer Stelle am Kraftfahrzeug 10 angeordnet und anders ausgerichtet sein. Bei den Objekten 18 kann es sich beispielsweise um andere Fahrzeuge, Personen, Steine, Wasserleitungen oder sonstige Hindernisse, wie auch Fahrbahnunebenheiten, insbesondere Schlaglöcher, handeln. In den Figuren 2 und 4 ist jeweils ein Objekt 18 beispielhaft als kariertes Rechteck angedeutet. Die Figur 2 ist ansonsten lediglich ein Funktionsschaubild einiger der Bauteile des Kraftfahrzeugs 10, das nicht der räumlichen Orientierung dient.

Das LiDAR-System 12 arbeitet nach einem Lichtimpulslaufzeitverfahren. Mit dem LiDAR-System 12 kann eine Entfernung des Objekts 18 relativ zum Kraftfahrzeug 10 ermittelt werden. Das LiDAR-System 12 kann beispielsweise als scannendes System, beispielsweise als sogenannter Laserscanner, oder als sogenanntes Flash-LiDAR-System ausgestaltet sein.

Das LiDAR-System 12 ist Teil eines Fahrerassistenzsystems 20 oder kann zumindest mit diesem verbunden sein. Mit dem Fahrerassistenzsystem 20 kann ein Fahrer des Kraftfahrzeugs 10 unterstützt werden. Beispielsweise kann das Kraftfahrzeug 10 mithilfe des Fahrerassistenzsystems 20 wenigstens teilweise autonom fahren. Mit dem Fahrerassistenzsystem 20 können Fahrfunktionen des Kraftfahrzeugs 10, beispielsweise eine Motorsteuerung, eine Bremsfunktion oder eine Lenkfunktion beeinflusst oder Hinweise oder Warnsignale ausgegeben werden. Hierzu ist das Fahrerassistenzsystem 20 mit Funktionseinrichtungen 22 regelnd und/oder steuernd verbunden. In der Figur 2 sind beispielhaft zwei Funktionseinrichtungen 22 dargestellt. Bei den Funktionseinrichtungen 22 kann es sich beispielsweise um ein Motorsteuerungssystem, ein Bremssystem, ein Lenksystem, eine Fahrwerksteuerung oder ein Signalausgabesystem handeln.

Das Fahrerassistenzsystem 20 weist eine elektronische Steuereinrichtung 24 auf, mit der entsprechende elektronische Steuer- und Regelsignale an die Funktionseinrichtungen 22 übermittelt und/oder von diesen empfangen und verarbeitet werden können.

Das LiDAR-System 12 umfasst eine Sendeeinrichtung 26, eine elektronische Steuer-und Auswerteeinrichtung 28 und eine Empfangseinrichtung 30.

Die Steuer- und Auswerteeinrichtung 28 ist signaltechnisch mit der Steuereinrichtung 24 verbunden. Mit der Steuereinrichtung 24 können abhängig von Objektinformationen des LiDAR-Systems 12 Fahrfunktionen des Kraftfahrzeugs 10 gesteuert/geregelt werden. Für die Erfindung ist es nicht wesentlich, ob elektrische Steuer- und/oder Auswertevorrichtungen, wie beispielsweise die Steuereinrichtung 24, die Steuer-und Auswerteeinrichtung 28, ein Motorsteuergerät des Kraftfahrzeugs 10 oder dergleichen, in einem oder mehreren Bauteilen integriert oder wenigstens teilweise als dezentrale Bauteile realisiert sind.

Die Sendeeinrichtung 26 umfasst eine Lichtquelle, beispielsweise einen Laser, mit der Sendesignale in Form von Lichtsignale ausgesendet werden können. Mit der Lichtquelle können gepulste optische Sendesignale 32 in den Überwachungsbereich 14 gesendet werden. Die Sendesignale 32 werden an dem Objekt 18 reflektiert und als entsprechend gepulste optische Empfangssignale 34 zu der Empfangseinrichtung 30 zurückgesendet. Aus der Lichtlaufzeit, also aus der Zeit zwischen dem Versenden eines Sendesignals 32 und dem Empfangen des entsprechenden Empfangssignals 34, wird mit der Steuer- und Auswerteeinrichtung 28 die Entfernung des Objekts 18 ermittelt.

In den Figuren 1, 3 und 4 sind der besseren Orientierung wegen die entsprechenden Achsen eines orthogonalen x-y-z-Koordinatensystems gezeigt. Die x-y-Ebene verläuft bei der normalen Betriebsorientierung des Kraftfahrzeugs 10 und des LiDAR-Systems 12 parallel zur Fahrbahnebene. Im Falle einer horizontal verlaufenden Fahrbahnebene verläuft die x-y-Ebene räumlich horizontal. Die z-Achse verläuft senkrecht zur Fahrbahnebene, entsprechend also räumlich vertikal. Wenn im Folgenden von "horizontal" oder "vertikal" die Rede ist, so bezieht sich dies auf das Fahrzeug 10 beziehungsweise das LiDAR-System 12 oder dessen Komponenten. Dies muss nicht zwangsläufig einer räumlich horizontalen oder räumlich vertikalen Orientierung entsprechen. Die Darstellungen in den Figuren 1, 3 und 4 sind ansonsten der besseren Übersichtlichkeit wegen nicht maßstabsgetreu und nicht winkeltreu.

Die Empfangseinrichtung 30 umfasst einen elektrooptischen Sensor 36 beispielhaft in Form eines zweidimensionalen CCD-Arrays, welches in der Figur 3 in der Vorderansicht, von dem Überwachungsbereich 14 aus betrachtet, gezeigt ist.

Der Sensor 36 verfügt über eine Detektionsfläche 38 mit einer Vielzahl von optischen Detektionsbereichen 40 und 42 in Form von Bildpunkten, die bekanntermaßen als "Pixel" bezeichnet werden. Die Detektionsbereiche 40 und 42 können einzeln ausgewertet werden. Die Detektionsfläche 38 erstreckt sich etwa parallel zur y-z-Ebene.

Die Detektionsfläche 38 ist beispielhaft in 23 Reihen 44 mit jeweils 12 Detektionsbereichen 40 und 42 aufgeteilt. Die Reihen 44 verlaufen jeweils entlang einer ersten Ausdehnungsrichtung 46, welche sich parallel zur z-Achse erstreckt. Die Reihen 44 sind in einer zweiten Ausdehnungsrichtung 48, welche sich parallel zur y-Achse erstreckt, betrachtet nebeneinander angeordnet.

Die Detektionsbereiche 40 und 42 sind in beispielhaft zwei Größen ausgestaltet und werden im Folgenden als erste, zentrale Detektionsbereiche 40 und als zweite, Rand-Detektionsbereiche 42 bezeichnet. In der ersten Ausdehnungsrichtung 46 sind die Ausdehnungen der zentralen Detektionsbereiche 40 deutlich größer als die Ausdehnungen der Rand-Detektionsbereiche 42. In der zweiten Ausdehnungsrichtung 48 sind die Ausdehnungen der zentralen Detektionsbereiche 40 und der Rand-Detektionsbereiche 42 beispielhaft identisch. Im Ergebnis weisen die zentralen Detektionsbereiche 40 jeweils eine größere aktive Fläche zur Erfassung von Photonen auf als die jeweiligen Rand-Detektionsbereiche 42.

Jede der Reihen 44 verfügt über vier zentrale Detektionsbereiche 40 im vertikalen Zentrum der Detektionsfläche 38. Die zentralen Detektionsbereiche 40 befinden sich direkt nebeneinander. Die zentralen Detektionsbereiche 40 der nebeneinander gelegenen Reihen 44 bilden einen zentralen Detektionsabschnitt 50 der Detektionsfläche 38. Der zentrale Detektionsabschnitt 50 erstreckt sich horizontal zwischen den beiden vertikalen Seitenrändern der Detektionsfläche 38.

Neben dem in der Figur 3 oberen horizontalen Rand und dem unteren horizontalen Rand des Sensors 36 sind in jeder Reihe 44 jeweils vier Rand-Detektionsbereiche 42 direkt nebeneinander angeordnet. Die Rand-Detektionsbereiche 42 der nebeneinander gelegenen Reihen 44 bilden insgesamt zwei Rand-Detektionsabschnitte 52 der Detektionsfläche 38. Die Rand-Detektionsabschnitte 52 erstrecken sich jeweils horizontal zwischen den beiden vertikalen Seitenrändern der Detektionsfläche 38.

Jeweilige Winkelauflösungen in den zentralen Detektionsbereichen 40 sind identisch. Ferner sind jeweilige Winkelauflösungen in den Rand-Detektionsbereichen 42 identisch. Ein Verhältnis der jeweiligen Winkelauflösung der zentralen Detektionsbereiche 40 zu der jeweiligen Winkelauflösung der Rand-Detektionsbereiche 42 beträgt beispielhaft etwa 10 zu 1. Die Winkelauflösung in den zentralen Detektionsbereichen 40 beträgt jeweils beispielhaft etwa 1°. Die Winkelauflösung in den Rand-Detektionsbereichen 42 beträgt jeweils beispielhaft etwa 0,1°.

In dem zentralen Detektionsabschnitt 50 werden die Empfangssignale 34 von Objekten 18 im Fernfeld mit ausreichender Auflösung erfasst. So können größere Objekte 18 wie beispielsweise Fahrzeuge oder Personen, welche sich im Fernfeld befinden, erfasst werden. In den Rand-Detektionsabschnitten 52 werden die Empfangssignale 34 von Objekten 18, welche sich im Nahfeld befinden, mit im Vergleich zur Auflösung des zentralen Detektionsabschnitts 50 entsprechend größerer Auflösung erfasst. So können auch kleinere Objekte, wie beispielsweise Steine, Schlaglöcher oder Wasserleitungen, welche sich im Nahfeld befinden, erfasst werden. Als Nahfeld im Sinne der Erfindung werden beispielsweise Entfernungen im Bereich einiger Meter bezeichnet. Das Fernfeld bezeichnet größere Entfernungen beispielsweise bis zu 110 m.

In der Figur 4 ist beispielhaft ein Szenario mit einem Objekt 18 gezeigt, welches mit der Empfangseinrichtung 30 im Fernfeld erfasst wird. Die Darstellung ist dabei der besseren Übersichtlichkeit wegen weder winkeltreu noch maßstabsgetreu. Die Empfangseinrichtung 30 hat einen Öffnungswinkel $\beta$ von beispielsweise 20°. Das Objekt hat eine Entfernung R von beispielsweise 110 m zu dem Sensor 36 der Empfangseinrichtung 30. Das Objekt 18 hat eine Ausdehnung H in Richtung der z- Achse, also in erster Ausdehnungsrichtung 46 des Sensors 36, von beispielsweise 2 m und eine nicht gezeigte Ausdehnung in Richtung der y-Achse, also in zweiter Ausdehnungsrichtung 48 des Sensors 36, von 1 m. Von dem Objekt 18 werden als Empfangssignal beispielhaft $N_r$ = 517 Photonen pro vertikale Reihe 44 auf den Sensor 36 reflektiert. Bei der Entfernung R= 110 m gilt für einen Zielwinkel $\alpha$ eines Ziel-Sichtbereichs des Objekts 18 in Richtung der z-Achse auf Seiten des Sensors 36 aus trigonometrischen Gründen der mathematische Zusammenhang:

$$\alpha = 2 \tan^{-1} (0,5 \times H / R) = 2 \tan^{-1} (0,5 \times 2m / 110m) \approx 1{,}042°.$$

Würde das Empfangssignal 34 in einem der Rand-Detektionsabschnitte 52 mit den Rand-Detektionsbereichen 42 auftreffen, welche eine Winkelauflösung von 0,1° aufweisen, würde der Zielwinkel $\alpha$ demnach 1,04270,1° = 10,42 Rand-Detektionsbereich e 42 abdecken. Bei der Gesamtzahl von $N_r$ = 517 Photonen pro vertikale Reihe 44 fallen dann 517 / 0,42 $\approx$ 49 Signalphotonen auf jeden angeleuchteten Rand-Detektionsbereich 42.

In dem zentralen Detektionsabschnitt 50 mit den zentralen Detektionsbereichen 40, welche eine jeweilige Winkelauflösung von 1° aufweisen, würde der Zielwinkel $\alpha$ 1,042°/1°= 1,042 Rand-Detektionsbereiche 42 abdeck en. Bei der Gesamtzahl von $N_r$ = 517 Photonen pro vertikale Reihe 44 fallen 517 / 1,042 $\approx$ 496 Signalphotonen auf jeden angeleuchteten zentralen Detektionsbereich 40.

Aus hier nicht weiter interessierenden statistischen Gründen wird angenommen, dass die Mindestanzahl $n_{min,pixel,pulse}$ von erforderlichen Signalphotonen, die erforderlich ist, um ein Signal von einem Rauschen $N_{noise}$, beispielsweise dem Umgebungslicht-Rauschen, unterscheiden zu können, mathematisch beschrieben wird

$$n_{min,pixel,pulse} = 4 \sqrt{N_{noise}}$$

Messungen haben ergeben, dass durch das Umgebungslicht etwa 248247 Rausch-Photonen $N_{noise}$ pro Reihe 44 auf den Sensor 36 einwirken.

Würde eine Reihe 44 des Sensors 36 lediglich aus beispielsweise 200 Rand-Detektionsbereichen 42 mit jeweils einer Winkelauflösung von 0,1° bestehen, so würden auf jeden Rand-Detektionsbereich 42 etwa 248247 / 200 $\approx$ 1241 Rausch-Photonen $N_{noise}$ fallen. Nach obigem Zusammenhang würde sich eine Mindestzahl von erforderlichen Signalphotonen $n_{min,pixel,pulse}$ = 4 $\sqrt{1241}$ $\approx$ 140 ergeben. Bei dem in der Figur 4 gezeigten Szenario mit einem Objektabstand R = 110 m würden jedoch lediglich etwa 49 Signalphotonen auf jeden der Rand-Detektionsbereiche 42 fallen. Es würde daher kein Signal erfasst werden, da das Signal-Rausch-Verhältnis zu gering ist.

Würde stattdessen eine Reihe 44 des Sensors 36 mit den gleichen Abmessungen in Richtung der z-Achse ausschließlich aus beispielsweise 20 der größeren zentralen Detektionsbereichen 40 mit jeweils einer Winkelauflösung von 1° bestehen, so würden auf jeden zentralen Detektionsbereich 40 etwa 248247 / 20 ≈ 12412 Rausch-Photonen $N_{noise}$ fallen. Nach obigem Zusammenhang würde sich eine Mindestzahl von erforderlichen Signalphotonen $n_{min,pixel,pulse}$ = 4 √12412 ≈ 445 ergeben. Bei dem in der Figur 4 gezeigten Szenario würden etwa 496 Signalphotonen auf jeden der zentralen Detektionsbereiche 40 fallen. Durch die Vergrößerung der Winkelauflösung bei den zentralen Detektionsbereichen 40 im Vergleich zu den Rand-Detektionsbereichen 42 wird das Signal-Rausch-Verhältnis so verbessert, dass die Anzahl der Signalphotonen zur Erfassung des Signals ausreicht. Die zentralen Detektionsbereiche 40 mit einer Winkelauflösung von 1° ermöglichen also, das oben beschriebene Objekt 18 mit einer Ausdehnung H parallel zur ersten Ausdehnungsrichtung 46 von 2 m in einer Entfernung von 110 m zu erfassen.

**Patentansprüche**

1. Empfangseinrichtung (30) für eine nach einem Lichtlaufzeitverfahren arbeitende optische Detektionsvorrichtung (12) für ein Fahrzeug (10) zum Empfangen von an einem Objekt (18) reflektierten optischen Empfangssignalen (34) insbesondere einer Sendeeinrichtung (26) der Detektionsvorrichtung (12), mit wenigstens einem optischen Sensor (36), welcher wenigstens eine Detektionsfläche (38) mit wenigstens einer entlang einer ersten Ausdehnungsrichtung (46) der wenigstens einen Detektionsfläche (38) verlaufenden Reihe (44) mit einer Mehrzahl von optischen Detektionsbereichen (40, 42) aufweist, wobei wenigstens zwei der Detektionsbereiche (40, 42) zur Ortsauflösung eines Empfangssignals (34) getrennt voneinander ausgewertet werden können, wobei die jeweiligen Ausdehnungen von wenigstens zwei Detektionsbereichen (40, 42) zumindest entlang der ersten Ausdehnungsrichtung (46) betrachtet unterschiedlich sind, wobei die Detektionsfläche (38) in wenigstens zwei Abschnitte (50, 52) unterteilt ist, in denen Signale von Objekten (18) aus unterschiedlichen Entfernungen zu der Empfangseinrichtung (30) erfasst werden können, wobei die Ausdehnung von entsprechenden Detektionsbereichen (40) in den Abschnitten (50) zur Erfassung von weiter entfernten Objekten (18) größer sind als die Ausdehnung von entsprechenden Detektionsbereichen (42) in Abschnitten (52) zur Erfassung von näheren Objekten (18) und dass eine Ausdehnung wenigstens eines zentralen Detektionsbereichs (40), welcher sich bezüglich der ersten Ausdehnungsrichtung (46) in der Nähe des Zentrums der wenigstens einen Detektionsfläche (38) befindet, größer ist als eine Ausdehnung wenigstens eines Rand-Detektionsbereichs (42), welcher sich im Vergleich zu dem wenigstens einen zentralen Detektionsbereich (40) näher an einem Rand der Detektionsfläche (38) befindet.

2. Empfangseinrichtung nach einem der vorigen Ansprüche, **dadurch gekennzeichnet, dass** ein Verhältnis einer Winkelauflösung in wenigstens einem ersten Detektionsbereich (40) mit einer größeren Ausdehnung, insbesondere einem zentralen Detektionsbereich, zu einer Winkelauflösung in wenigstens einem zweiten Detektionsbereich (42) mit einer kleineren Ausdehnung, insbesondere einem Rand-Detektionsbereich, etwa zwischen 12 zu 1 und 8 zu 1, insbesondere etwa 10 zu 1, beträgt.

3. Empfangseinrichtung nach einem der vorigen Ansprüche, **dadurch gekennzeichnet, dass** wenigstens ein Detektionsbereich (40, 42) mit einem Bildpunkt realisiert ist und/oder wenigstens ein Detektionsbereich aus mehreren Bildpunkten zusammengefasst ist oder wird.

4. Empfangseinrichtung nach einem der vorigen Ansprüche, **dadurch gekennzeichnet, dass** der wenigstens eine optische Sensor (36) ein elektrooptischer Sensor ist.

5. Optische Detektionsvorrichtung (12) für ein Fahrzeug (10), die nach einem Lichtlaufzeitverfahren arbeitet, mit wenigstens einer Sendeeinrichtung (26) zum Senden von optischen Sendesignalen (32) und wenigstens einer Empfangseinrichtung (30) zum Empfangen von an einem Objekt (18) reflektierten Sendesignalen (32) als Empfangssignale (34), wobei die wenigstens eine Empfangseinrichtung (30) wenigstens einen optischen Sensor (36) umfasst, welcher wenigstens eine Detektionsfläche (38) mit wenigstens einer entlang einer ersten Ausdehnungsrichtung (46) der wenigstens einen Detektionsfläche (38) verlaufende Reihe (44) mit einer Mehrzahl von optischen Detektionsbereichen (40, 42) aufweist, wobei wenigstens zwei der Detektionsbereiche (40, 42) zur Ortsauflösung eines Empfangssignals (34) getrennt voneinander ausgewertet werden können, wobei die jeweiligen Ausdehnungen von wenigstens zwei Detektionsbereichen (40, 42) zumindest entlang der ersten Ausdehnungsrichtung (46) betrachtet unterschiedlich sind, wobei die Detektionsfläche (38) in wenigstens zwei Abschnitte (50, 52) unterteilt ist, in denen Signale von Objekten (18) aus unterschiedlichen Entfernungen zu der Empfangseinrichtung (30) erfasst werden können, wobei die Ausdehnung von entsprechenden Detektionsbereichen (40) in den Abschnitten (50) zur Erfassung von weiter entfernten Objekten (18) größer sind als die Ausdehnung von entsprechenden Detektionsbereichen (42) in Abschnitten (52) zur Erfassung von näheren Objekten (18) und dass eine Ausdehnung wenigstens eines zentralen Detektionsbereichs (40), welcher sich bezüglich der ersten Ausdehnungsrichtung (46) in der Nähe des Zentrums der wenigstens einen Detektionsfläche (38) befindet, größer ist als eine Ausdehnung wenigstens eines Rand-Detektionsbereichs (42), welcher sich im Vergleich zu dem wenigstens einen zentralen Detektionsbereich (40) näher an einem Rand der Detektionsfläche (38) befindet.

6. Fahrerassistenzsystem (20) für ein Fahrzeug (10), mit wenigstens einer nach einem Lichtlaufzeitverfahren arbeitenden optischen Detektionsvorrichtung (12), und wenigstens einer elektronischen Steuereinrichtung (24) zur Steuerung von Funktionseinrichtungen (22) des Fahrzeugs (10) abhängig von Informationen, welche durch die wenigstens eine Detektionsvorrichtung (12) bereitgestellt werden, wobei die wenigstens eine Detektionsvorrichtung (12) wenigstens eine Sendeeinrichtung (26) zum Senden von optischen Sendesignalen (32) und wenigstens eine Empfangseinrichtung (30) zum Empfangen von an einem Objekt (18) reflektierten Sendesignalen (32) als Empfangssignale (34) aufweist, wobei die wenigstens eine Empfangseinrichtung (30) wenigstens einen optischen Sensor (36) umfasst, welcher wenigstens eine Detektionsfläche (38) mit wenigstens einer entlang einer ersten Ausdehnungsrichtung (46) der wenigstens einen Detektionsfläche (38) verlaufenden Reihe (44) mit einer Mehrzahl von optischen Detektionsbereichen (40, 42) aufweist, wobei wenigstens zwei der Detektionsbereiche (40, 42) zur Ortsauflösung eines Empfangssignals (34) getrennt voneinander ausgewertet werden können, wobei die jeweiligen Ausdehnungen von wenigstens zwei Detektionsbereichen (40, 42) zumindest entlang der ersten Ausdehnungsrichtung (46) betrachtet unterschiedlich sind, wobei die Detektionsfläche (38) in wenigstens zwei Abschnitte (50, 52) unterteilt ist, in denen Signale von Objekten (18) aus unterschiedlichen Entfernungen zu der Empfangseinrichtung (30) erfasst werden können, wobei die Ausdehnung von entsprechenden Detektionsbereichen (40) in den Abschnitten (50) zur Erfassung von weiter entfernten Objekten (18) größer sind als die Ausdehnung von entsprechenden Detektionsbereichen (42) in Abschnitten (52) zur Erfassung von näheren Objekten (18) und dass eine Ausdehnung wenigstens eines zentralen Detektionsbereichs (40), welcher sich bezüglich der ersten Ausdehnungsrichtung (46) in der Nähe des Zentrums der wenigstens einen Detektionsfläche (38) befindet, größer ist als eine Ausdehnung wenigstens eines Rand-Detektionsbereichs (42), welcher sich im Vergleich zu dem wenigstens einen zentralen Detektionsbereich (40) näher an einem Rand der Detektionsfläche (38) befindet.

**Claims**

1. Receiving device (30) for an optical detection apparatus (12) for a vehicle (10), operating in accordance with a time-of-flight method, for receiving optical reception signals (34), in particular of a transmitting device (26) of the detection apparatus (12), that are reflected at an object (18), having at least one optical sensor (36) comprising at least one detection surface (38) with at least one row (44) with a plurality of optical detection regions (40, 42) extending along a first extension direction (46) of the at least one detection surface (38), wherein at least two of the detection regions (40, 42) can be evaluated separately from one another for the spatial resolution of a reception signal (34), wherein the respective extents of at least two detection regions (40, 42) are different at least when viewed along the first extension direction (46), wherein the detection surface (38) is divided into at least two sections (50, 52), in which signals from objects (18) can be captured from different distances from the receiving device (30), wherein the extent of corresponding detection regions (40) in the sections (50) for capturing objects (18) at greater distances is larger than the extent of corresponding detection regions (42) in sections (52) for capturing closer objects (18), and wherein an extent of at least one central detection region (40), which with respect to the first extension direction (46) is located close to the centre of the at least one detection surface (38), is larger than an extent of at least one edge detection region (42), which is located closer to an edge of the detection surface (38) than the at least one central detection region (40).

2. Receiving device according to one of the preceding claims, **characterized in that** a ratio of an angular resolution in at least one first detection region (40) with a larger extent, in particular a central detection region, to an angular resolution in at least one second detection region (42) with a smaller extent, in particular an edge detection region, is about between 12 to 1 and 8 to 1, in particular about 10 to 1.

3. Receiving device according to either of the preceding claims, **characterized in that** at least one detection region (40, 42) with one image point is implemented and/or at least one detection region is or becomes made up of a plurality of image points.

4. Receiving device according to one of the preceding claims, **characterized in that** the at least one optical sensor (36) is an electrooptical sensor.

5. Optical detection apparatus (12) for a vehicle (10), operating in accordance with a time-of-flight method, having at least one transmitting device (26) for transmitting optical transmission signals (32) and at least one receiving device (30) for receiving transmission signals (32) reflected at an object (18) as reception signals (34), wherein the at least one receiving device (30) comprises at least one optical sensor (36) having at least one detection surface (38) with at least one row (44) with a plurality of optical detection regions (40, 42) extending along a first extension direction (46) of the at least one detection surface (38), wherein at least two of the detection regions (40, 42) can be evaluated separately from one another for the spatial resolution of a reception signal (34), wherein the respective extents of at least two detection regions (40, 42) are different at least when viewed along the first extension direction (46), wherein the detection surface (38) is divided into at least two sections (50, 52), in which signals from objects (18) can be captured from different distances from the receiving device (30), wherein the extent of corresponding detection regions (40) in the sections (50) for capturing objects (18) at greater distances is larger than the extent of corresponding detection regions (42) in sections (52) for capturing closer objects (18), and wherein an extent of at least one central detection region (40), which with respect to the first extension direction (46) is located close to the centre of the at least one detection surface (38), is larger than an extent of at least one edge detection region (42), which is located closer to an edge of the detection surface (38) than the at least one central detection region (40).

6. Driver assistance system (20) for a vehicle (10), having at least one optical detection apparatus (12), operating in accordance with a time-of-flight method, and at least one electronic control device (24) for controlling functional devices (22) of the vehicle (10) in dependence on information provided by the at least one detection apparatus (12), wherein the at least one detection apparatus (12) has at least one transmission device (26) for transmitting optical transmission signals (32) and at least one receiving device (30) for receiving transmission signals (32) reflected at an object (18) as reception signals (34), wherein the at least one receiving device (30) comprises at least one optical sensor (36) having at least one detection surface (38) with at least one row (44) with a plurality of optical detection regions (40, 42) extending along a first extension direction (46) of the at least one detection surface (38), wherein at least two of the detection regions (40, 42) can be evaluated separately from one another for the spatial resolution of a reception signal (34), wherein the respective extents of at least two detection regions (40, 42) are different at least when viewed along the first extension direction (46), wherein the detection surface (38) is divided into at least two sections (50, 52), in which signals from objects (18) can be captured from different distances from the receiving device (30), wherein the extent of corresponding detection regions (40) in the sections (50) for capturing objects (18) at greater distances is larger than the extent of corresponding detection regions (42) in sections (52) for capturing closer objects (18), and wherein an extent of at least one central detection region (40), which with respect to the first extension direction (46) is located close to the centre of the at least one detection surface (38), is larger than an extent of at least one edge detection region (42), which is located closer to an edge of the detection surface (38) than the at least one central detection region (40).

## Revendications

1. Equipement de réception (30) pour un dispositif de détection optique (12) fonctionnant selon un procédé utilisant le temps de propagation de la lumière pour un véhicule (10), destiné à recevoir des signaux de réception optiques (34) réfléchis sur un objet (18), en particulier d'un équipement d'émission (26) du dispositif de détection (12), comprenant au moins un capteur optique (36) qui présente au moins une surface de détection (38) dotée d'au moins une rangée (44) s'étendant le long d'une première direction d'extension (46) de ladite au moins une surface de détection (38) avec une pluralité de zones de détection optiques (40, 42), au moins deux des zones de détection (40, 42) pouvant être évaluées séparément l'une de l'autre pour la résolution spatiale d'un signal de réception (34), les extensions respectives d'au moins deux zones de détection (40, 42) étant différentes, au moins vues le long de la première direction d'extension (46), la surface de détection (38) étant divisée en au moins deux parties (50, 52) dans lesquelles des signaux d'objets (18) provenant de différentes distances par rapport à l'équipement de réception (30) peuvent être détectés, dans lequel l'extension de zones de détection (40) correspondantes dans les parties (50) destinées à la détection d'objets (18) plus éloignés est supérieure à l'extension de zones de détection (42) correspondantes dans des parties (52) destinées à la détection d'objets (18) plus rapprochés, et une extension d'au moins une zone de détection centrale (40), qui se trouve à proximité du centre de ladite au moins une surface de détection (38) par rapport à la première direction d'extension (46), étant supérieure à une extension d'au moins une zone de détection marginale (42) qui se trouve plus proche d'un bord de la surface de détection (38) en comparaison avec ladite au moins une zone de détection centrale (40).

2. Equipement de réception selon l'une quelconque des revendications précédentes, **caractérisé en ce qu'**un rapport entre une résolution angulaire dans au moins une première zone de détection (40) ayant une extension supérieure, en particulier une zone de détection centrale, et une résolution angulaire dans au moins une deuxième zone de détection (42) ayant une extension inférieure, en particulier une zone de détection marginale, est approximativement compris entre 12 sur 1 et 8 sur 1, en particulier approximativement égal à 10 sur 1.

3. Equipement de réception selon l'une quelconque des revendications précédentes, **caractérisé en ce qu'**au moins une zone de détection (40, 42) est réalisée avec un pixel, et/ou au moins une zone de détection est ou sera rassemblée à partir de plusieurs pixels.

4. Equipement de réception selon l'une quelconque des revendications précédentes, **caractérisé en ce que** ledit au moins un capteur optique (36) est un capteur électro-optique.

5. Dispositif de détection optique (12) pour un véhicule (10), qui fonctionne selon un procédé utilisant le temps de propagation de la lumière, comprenant au moins un équipement d'émission (26) destiné à émettre des signaux d'émission optiques (32) et au moins un équipement de réception (30) destiné à recevoir comme signaux de réception (34) des signaux d'émission (32) réfléchis sur un objet (18), ledit au moins un équipement de réception (30) comprenant au moins un capteur optique (36) qui présente au moins une surface de détection (38) dotée d'au moins une rangée (44) s'étendant le long d'une première direction d'extension (46) de ladite au moins une surface de détection (38) avec une pluralité de zones de détection optiques (40, 42), au moins deux des zones de détection (40, 42) pouvant être évaluées séparément l'une de l'autre pour la résolution spatiale d'un signal de réception (34), les extensions respectives d'au moins deux zones de détection (40, 42) étant différentes, au moins vues le long de la première direction d'extension (46), la surface de détection (38) étant divisée en au moins deux parties (50, 52) dans lesquelles des signaux d'objets (18) provenant de différentes distances par rapport à l'équipement de réception (30) peuvent être détectés, dans lequel l'extension de zones de détection (40) correspondantes dans les parties (50) destinées à la détection d'objets (18) plus éloignés est supérieure à l'extension de zones de détection (42) correspondantes dans des parties (52) destinées à la détection d'objets (18) plus rapprochés, et une extension d'au moins une zone de détection centrale (40), qui se trouve à proximité du centre de ladite au moins une surface de détection (38) par rapport à la première direction d'extension (46), étant supérieure à une extension d'au moins une zone de détection marginale (42) qui se trouve plus proche d'un bord de la surface de détection (38) en comparaison avec ladite au moins une zone de détection centrale (40).

6. Système d'assistance au conducteur (20) pour un véhicule (10), comprenant au moins un dispositif de détection optique (12) fonctionnant selon un procédé utilisant le temps de propagation de la lumière et au moins un équipement de commande électronique (24) pour commander des équipements fonctionnels (22) du véhicule (10) en fonction d'informations qui ont été fournies par ledit au moins un dispositif de détection (12), ledit au moins un dispositif de détection (12) présentant au moins un équipement d'émission (26) destiné à émettre des signaux d'émission optiques (32) et au moins un équipement de réception (30) destiné à recevoir comme signaux de réception (34) des signaux d'émission (32) réfléchis sur un objet (18), ledit au moins un équipement de réception (30) comprenant au moins un capteur optique (36) qui présente au moins une surface de détection (38) dotée d'au moins une rangée (44) s'étendant le long d'une première direction d'extension (46) de ladite au moins une surface de détection (38) avec une pluralité de zones de détection optiques (40, 42), au moins deux des zones de détection (40, 42) pouvant être évaluées séparément l'une de l'autre pour la résolution spatiale d'un signal de réception (34), les extensions respectives d'au moins deux zones de détection (40, 42) étant différentes, au moins vues le long de la première direction d'extension (46), la surface de détection (38) étant divisée en au moins deux parties (50, 52) dans lesquelles des signaux d'objets (18) provenant de différentes distances par rapport à l'équipement de réception (30) peuvent être détectés, dans lequel l'extension de zones de détection (40) correspondantes dans les parties (50) destinées à la détection d'objets (18) plus éloignés est supérieure à l'extension de zones de détection (42) correspondantes dans des parties (52) destinées à la détection d'objets (18) plus rapprochés, et une extension d'au moins une zone de détection centrale (40), qui se trouve à proximité du centre de ladite au moins une surface de détection (38) par rapport à la première direction d'extension (46), étant supérieure à une extension d'au moins une zone de détection marginale (42) qui se trouve plus proche d'un bord de la surface de détection (38) en comparaison avec ladite au moins une zone de détection centrale (40).

10

12

z

y

_Fig. 1_

10

20

12

26

28

30

24

22    22

32

34

36

14

18

16

_Fig. 2_

Fig. 3

Fig. 4

**IN DER BESCHREIBUNG AUFGEFÜHRTE DOKUMENTE**

**In der Beschreibung aufgeführte Patentdokumente**

- DE 102011005746